# EUROPÄISCHE PATENTSCHRIFT

(11) **EP 1 047 902 B1**
(45) Veröffentlichungstag und Bekanntmachung des Hinweises auf die Patenterteilung: **12.01.2005**
(21) Anmeldenummer: 99965399.1
(22) Anmeldetag: 12.11.1999
(51) Int. Cl.: F16P 1/06

(54) **LASERSCHUTZWAND**
LASER PROTECTIVE WALL
PAROI DE PROTECTION LASER

(30) Priorität: 12.11.1998 DE 19852118; 03.12.1998 DE 19855793
(43) Veröffentlichungstag der Anmeldung: 02.11.2000
(73) Patentinhaber: Paletti Profilsysteme GmbH & Co., 32423 Minden (DE)
(72) Erfinder: KAHL, Helmuth, D-32457 Porta Westfalica (DE)
(74) Vertreter: Philipp, Matthias, Dr.
(86) Internationale Anmeldenummer: PCT/EP1999/008749
(87) Internationale Veröffentlichungsnummer: WO 2000/029778

(56) Entgegenhaltungen:
- DE-C- 19 629 037
- US-A- 4 659 902
- US-A- 4 730 113

## Beschreibung

Die Erfindung betrifft eine Laserschutzwand, die aus mindestens einer metallischen oberflächenbehandelten Blechwandung aus eloxiertem oder chromatiertem Leichtmetall besteht.

Aus der DE 196 29 037 C1 sind Laserschutzwände bekannt, die zum Abschirmen von Laserarbeitsstationen, insbes. von leistungsstarken Metallbearbeitungslasern, dienen, wobei die Schutzwände aus zueinander parallel beabstandet gehaltenen ebenen Metallblechen bestehen, deren jeweils dem Laser zugewandte Oberfläche mit einer Lichtabsorbtionsschicht versehen ist. Zur Halterung der Bleche dient eine Rahmenkonstruktion, innerhalb welcher die Bleche selbsttragend ausgebildet sind, was je nach der Wandgröße eine erhebliche Blechdicke bedingt. Versuche haben gezeigt, daß die absorbierende Farbschicht, insbes. auch Grafitschicht, kaum ein nennenswertes Hindernis für einen Laserstrahl darstellt.

Weiterhin ist es aus der US 4,659,902 bekannt, eine Leichmetall-Blechplatte aus schwarz eloxiertem Aluminium als Laserschutz zu verwenden. Die Schwärzung soll der Absorbtion des Laserstrahlers dienen, und das Aluminium wirkt als Wärmesenke.

Die Aufgabe der Erfindung ist es, eine wesentlich wirksamere Laserschutzwand zu offenbaren bei unveränderter oder geringerer Materialstärke.

Die Lösung besteht darin, daß die Wandung dünnwandige Leichtmetall-Extrusionsprofilstangen aufweist, die aus vielen dünnen Innenwänden mit mehrfach gestaffelten, dünnwandigen, verwinkelten Innenstrukturen mit zwischenliegenden Hohlräumen bestehen.

Vorteilhafte Ausgestaltungen sind in den Unteransprüchen angegeben.

Umfangreiche Versuche haben überraschend gezeigt, daß eine Eloxalschicht oder eine Chromatschicht auf einem Leichtmetallteil ein wesentliche Erhöhung der Ein- und Durchbrennzeit eines Laserstrahles erbringt und bei einem schwachen oder durch Streuung geschwächten Laserstrahl ein Eindringen des Strahles ganz verhindert. Darüberhinaus erhöht eine austrittseitige Eloxalschicht die Streuung eines durchgetretenen Laserstrahles, so daß dessen Durchdringungsleistung an einer nachfolgenden Wand demgemäß geschwächt ist.

Vorzugsweise wird eine Rahmenkonstruktion gebildet, bei der die erfindungsgemäßen Leichtmetall-Extrusionsprofilstangen metallischen Blechwände einfassen und/oder seitlich stützen.

Als zweckmäßig hat sich erwiesen, wenn sich in die Hohlräume Verbindungselemente einsetzen lassen, die lösbar gerastet gehalten sind, wenn die äußeren Wandungen nach innen erweiterte Nuten aufweisen.

Vorzugsweise sind solche Nuten an allen Seiten vorgesehen, so daß auch Ecken von vielschichtigen Blechwänden an den Profilträgern ausgebildet werden können.

Weiterhin wird eine Wandkonstruktion geoffenbart, die einfacher ist und variabler an unterschiedliche Arbeitsfelder anpaßbar ist.

Diese Wand ist aus eng aneinandergereihten extrudierten Leichtmetall-Profilsträngen ausgebildet, von denen eine Wand oder mindestens eine durchgehende Teilwand aus gereihten Leichtmetall-Hohlprofilsträngen gemäß der Erfindung zusammengesetzt ist.

Umfangreiche Versuche haben erwiesen, daß eine Schwächung der flächenspezifischen Strahlungsintensität kaum im Inneren eines Bleches auftritt sondern insbesondere jeweils austrittseitig einer durchbohrten Blechwandung durch eine divergierende Aufweitung des Strahles auftritt.

Insbesondere wenn die Schutzwand nahe des Laserfocus angeordnet sein muß, wo z.B. ein 4 kW-Laser einen Durchmesser von 0,4 mm hat, läßt sich die neuartige Schutzwand mit Erfolg einsetzen. Wird nur eine Teilwandung aus den Hohlprofilelementen erstellt, und werden deren Fugenbereiche jeweils überbrückt, so ergeben sich durch die verwinkelten Innenstrukturen in jeder Richtung vier oder mehr Wandungen, durch die ein durchdringender Strahl jeweils austrittseitig zerstreut wird, bis er so stark geschwächt ist, daß er keine Durchdringungskraft mehr hat.

Die einzelnen Hohlprofilestränge und außenseitigen Flachprofilstränge werden fugenüberdeckend je nach Bedarf zusammengesetzt. Es können bei Bedarf mehrere Schichten von Hohlprofilsträngen hintereinandergesetzt werden, und die Außenflächen werden mit den Flachprofilplatten verkleidet.

Die einzelnen Profilelemente sind mit sich nach innen erweiterenden Fugen versehen, die sich jeweils gegenüberliegen, wenn die Profilelemente nebeneinander bzw. versetzt hintereinander angeordnet sind. In die Fugen werden dann formschlüssige Federprofilstreifen eingesetzt, wenn eine Verbindung hergestellt werden soll. Die Federprofilstreifen können auch angeformt sein, wobei jeweils Nut und Feder komplementär zueinander ausgebildet sind, was eine problemlose Reihung und Hintereinanderschichtung erlaubt.

Die äußeren Flachprofilstränge sind bevorzugt mit Spreizfederstreifen versehen, die in die Nuten der Hohlprofilstränge eingedrückt werden und sich dort lösbar verhaken.

Auch zwischen dem Flachprofilstrang und dem Hohlprofilstrang ist ein strahlstreuender Zwischenraum ausgebildet, da am Flachprofile endseitig je ein Abstandshalter ausgebildet ist, der sich am Hohlprofil abstützt.

Die einzelnen Hohlprofile sind vorzusweise im wesentlichen äußerlich rechteckig und weisen ein Seitenverhältnis von 1 zu 2 auf, so daß ohne Sonderprofile ein verschachtelter Wandaufbau auch in rechtwinkligen Wandecken mit konstanter Gesamtdicke auszuführen ist. Diese Bauweise wird dadurch unterstützt, daß die Nuten an den kurzen Profilseiten den gleichen Abstand zur Ecke haben wie die Nuten an den Längsseiten des Profils.

Vorteilhafte Ausgestaltungen sind anhand der Figur 1 bis 4 beschrieben.
- Fig. 1: zeigt einen Querschnitt durch eine erfindungsgemäße Wandkonstruktion in einem Eckbereich bei verkürzt gezeigten Wänden;
- Fig. 2: zeigt einen nicht zur Erfindung gehörenden Verbund-Schichtaufbau einer Wand;
- Fig. 3: zeigt einen nicht zur Erfindung gehörenden Lamellenaufbau einer Wand;
- Fig. 4: zeigt einen erfindungsgemäßen modularen Wandaufbau aus Profilmaterial.

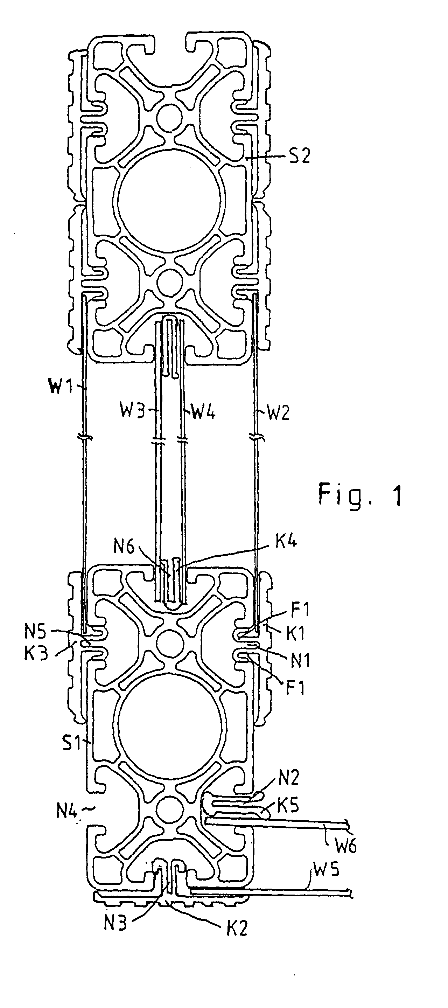

Der Aufbau der Laserschutzwand gemäß Figur 1 besteht aus eloxierten Leichtmetallstützen S1, S2, die auch durch einen oder mehrere Querverbinder gleicher Art rahmenartig - nicht dargestellt - zusammengefügt sein können, und einer oder mehreren zwischen diesen eingesetzten Wandungen W1 - W4 aus eloxiertem Leichtmetallblech. Die Wandstärke der Bleche beträgt beispielsweise 1 mm. Ihre Dicke ist einerseits durch die nötige Stabilität der Wandung bestimmt als auch durch die erforderliche Wärmeleitung, die ausreichen muß, um die von einem auftreffenden Laserstrahl der maximal abzuschirmenden Intensität durch die hochschmelzende Eloxalschicht hindurch aufgenommene Wärme seitlich abzuführen, so daß der Schmelzpunkt der Eloxalschicht und der Verdampfungspunkt des Leichtmetalles nicht erreicht wird. Die mechanische Stabilität des Bleches läßt sich in bekannter Weise durch eine wellblechartige Profilierung, die nicht dargestellt ist, steigern.

In Fällen, in denen nur ein flächenspezifisch leistungsschwacher Laserstrahl abzuschirmen ist, z.B. bei größerer Entfernung der Wandung vom Brennpunkt, wo der Strahl bereits den vielfachen Brennpunkt-Durchmesser aufweist, genügt eine Blechwand Wl. Bei höheren spezifischen Strahlleistungen kommen ein oder mehrere weitere Wandungen W2 - W4 zum Einsatz.

Die Stützen S1, S2 weisen auf allen Seiten sich nach innen öffnende Längsnuten N1 - N6 auf, in denen Klemmleisten K1 - K5 rastend lösbar gehalten sind, die die Wandbleche W1 - W6 an den Stützon kraftschlüssig halten.

Die Ständer S1, S2 sind vorzugsweise dünnwandige Extrusionsprofilstangen von rechteckigem Querschnitt, wobei das Seitenverhältnis bevorzugt gradzahlig, z.B. zwei zu eins, ist und dementsprechend die Nuten N1 - N6 angeordnet sind, daß in gleicher Bauweise ein- oder mehrschichtige Wände auch um eine beständerte Ecke herum gleichartig gebaut werden können.

Die Klemmstücke K1, K2, K3 sind im wesentlichen flache eloxierte oder chromatierte Leichtmetall-Streifenextrudate, deren Breite etwa der Breite der Schmalseiten einer Stütze S1 entspricht. Die Klemmstücke weisen eine hakenartig beidseitig sich spreizende Feder F1 auf, die sich in der Nut N1, N3, N5 lösbar verklammert. Die flachen seitlichen Streifen überdecken die Randzonen der an dem Ständer außen anliegenden Wandbleche.

Der Halterung von innenliegenden Wandblechen W3, W4 dienen im Querschnitt bügelförmige Klemmleisten K4, K5, die vor dem Einbringen der Wandbleche W3, W4, W6 in die Nut N2, N6 eingelegt werden und seitlich zur Nutwandung je ein Wandblech W3, W4, W6 oder innen zwischen den Bügelarmen ein Wandblech einklemmen.

Auch die Klemmleisten K1 - K5 sind bevorzugt aus eloxiertem Leichtmetallextrudat hergestellt.

In der Stütze S1, S2 bieten die vielschichtigen Querstege mit den zwischenliegenden Hohlräumen auch durch ihre Eloxalschichten eine Gewähr dafür, daß auch durch diese kein Laserstrahl aus der Schutzwand ausbrechen kann. Die Anzahl der im Winkel angeordneten Blechwandungen W1 - W4; W5, W6 sind beispielhaft unterschiedlich gewählt, was dann erlaubt ist, wenn diese unterschiedliche Entfernung zum Laserstrahlfokus haben und somit die abzuschirmende spezifische Strahlleistung unterschiedlich ist.

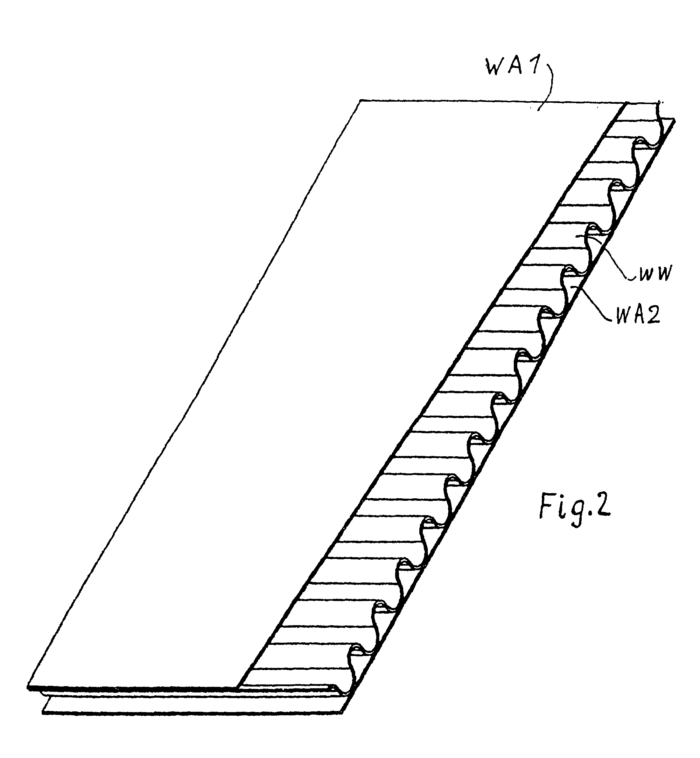

Figur 2 zeigt bei teilweise entfernter Deckwand eine in sich stabile dreischichtige Verbundwand aus eloxiertem oder chromatiertem Leichtmetall, bei der zwichen zwei ebenen Abschlußwänden WA1, WA2 eine gewellte Zwischenwand WW eingelagert und verschweißt ist.

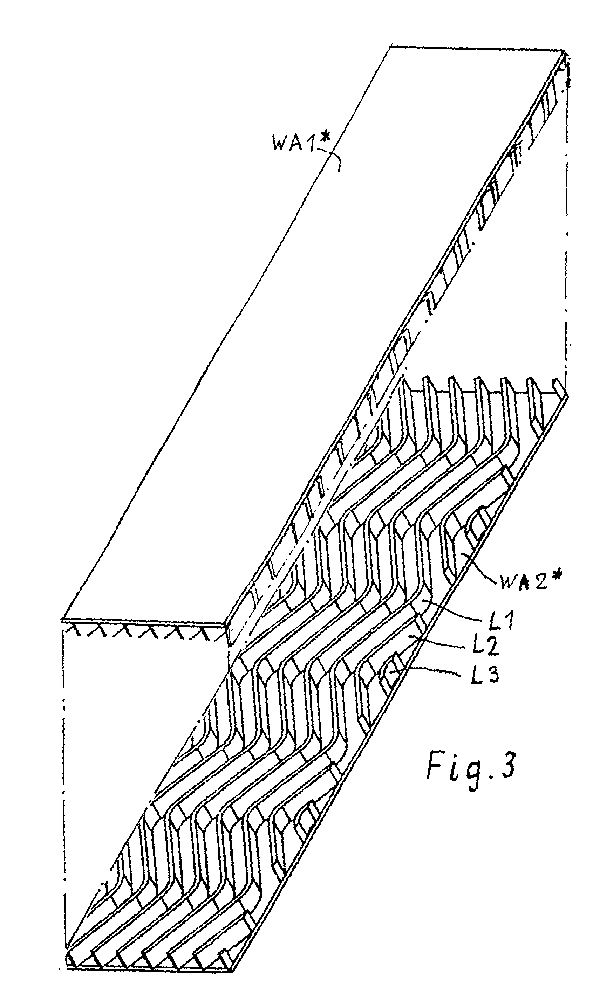

Figur 3 zeigt in verkürzter Form, teilweise aufgeschnitten, eine weitere Variante einer selbsttragenden Leichtmetallwand, bei der wellenförmige Lamellenstreifen L1, L2, L3 parallel zueinander zwischen ebenen Abschlußwänden WA1*, WA2* angeordnet sind. Solche Wandstücke können beliebig aneinandergereiht werden.

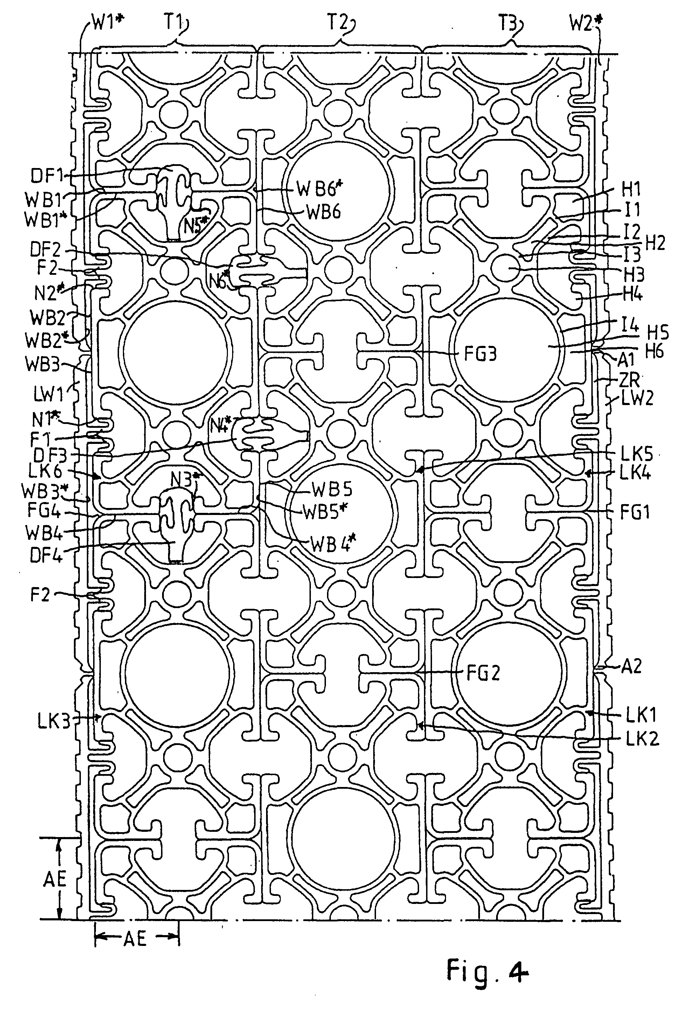

Figur 4 zeigt im Querschnitt durch die Profilstränge eines Abschnitts einer Laserschutzwand, die auch extremen Anforderungen genügt. Sie ist aus drei eng hintereinanderliegenden Teilschutzwänden T1 - T3 aus gleichen innenstrukturierten Hohlprofilsträngen LK1 - LK6 aus extrudiertem Leichtmetall zusammengesetzt und jeweils außenseitig mit Wänden W1*, W2* aus im wesentlichen flachen Profilsträngen LW1, LW2 besetzt.

In den Hohlprofilsträngen LK1 sind dünne verwinkelte Innenwände I1 - I4 mit unterschiedlichen Schrägstellungen ausgebildet, so daß zwischen diesen Hohlräume H1 - H6 verschiedener Gestalt geschaffen sind.

Die Fugen FG1 - FG4 zwischen den Hohlprofilsträngen LK1 - LK6 sind in der Querrichtung der drei Teilwände T1 - T3 sowie zu den Flachprofilsträngen (LW1, LW2) jeweils versetzt zueinander angeordnet.

Wie in einem Teilbereich gezeigt, sind die Wandbereiche WB1 - WB6 der Profilstränge LK6 längsseitig mit Nuten N1* - N6* versehen, die jeweils zu Nuten oder Federn F1, F2 der angrenzenden Wandbereiche WB1* - WB6* der Wandelemente passend voreinander parallel liegen, so daß jeweils angeformte Federn F1, F2 oder eingesetzte Doppelfedern DF1 - DF4 formschlüssige Verbindungen von Wandelement zu Wandelement herstellen.

Die Federn F1, F2 und/oder die Doppelfedern DF1 - DF4 sind vorteilhaft als Spreizfedern zweiarmig ausgebildet, so daß sie lösbar in die sich nach innen erweiternde Nuten N1* - N6* formschlüssig eingreifen und vorzugsweise lösbar einrasten.

Die außenliegenden Flachprofilstränge LW2 sind an den bei den Enden mit einem Abstandshaltesteg A1, A2 versehen, so daß der flache Wandprofilstrang jewils überwiegend mit einem das evtl. durchtretende Laserlicht streuenden Zwischenraum ZR zum benachbarten Hohlprofilstrang LK1, LK4 beabstandet ist.

Die Hohlprofilstränge LK1 - LK6 sind bevorzugt im wesentlichen rechteckig ausgebildet und weisen ein ganzzahliges Seitenlängenverhältnis größer 1 auf. Die dargestellten Profile haben ein Kantenlängenverhältnis von 2 zu 1. Die Nuten N1*, N2* auf den angrenzenden Seiten haben jeweils den gleichen Eckabstand AE. Dadurch lassen sich rechtwinklige Wandecken durch entsprechenden Anbau von weiteren Profilsträngen gleicher Art vollständig mit Fugenversatz ausführen und in Nutfederbauweise verbinden.

Sind Federn und Nuten an den verschiedenen Profilsträngen ausgeführt, was nicht dargestellt ist, so sind sie zweckmäßig alternierend am Umfang ausgebildet, so daß immer gleichartige Hohlprofile und Flachprofile zum Einsatz kommen können, auch wenn eine Wandecke daraus aufgebaut wird.

## Patentansprüche

1. Laserschutzwand, die aus mindestens einer metallischen oberflächenbehandelten Blechwandung (W1 - W6, S1, S2; W1*, W2*) aus eloxiertem oder chromatiertem Leichtmetall besteht,
**dadurch gekennzeichnet, daß** die Wandung dünnwandige Leichtmetall-Extrusionsprofilstangen (S1, S2) aufweist, die aus vielen dünnen Innenwänden mit mehrfach gestaffelten, dünnwandigen, verwinkelten Innenstrukturen (I1 - I4) mit zwischenliegenden Hohlräumen bestehen.

2. Laserschutzwand nach Anspruch 1, **dadurch gekennzeichnet, daß** aus den Profilstangen (S1, S2) eine Stützen- oder Rahmenkonstruktion gebildet ist, an der eine oder mehrere der Blechwände (W1 - W6, W1*, W2*) festgelegt sind.

3. Laserschutzwand nach einem der Ansprüche 1 oder 2, **dadurch gekennzeichnet, daß** die Profilstange (S1, S2) Längsnuten (N1 - N6) aufweist, in denen die Blechwände (W3, W4, W6) eingesteckt unmittelbar oder mittelbar mit Klemmleisten (K4, K5) erster Art festgelegt sind oder in denen an der Profilstange (S1, S2) außen anliegende Blechwände (W1, W2, W5) durch Klemmleisten (K1 - K3) zweiter Art mittelbar gehalten sind.

4. Laserschutzwand nach Anspruch 3, **dadurch gekennzeichnet, daß** die Klemmleisten (K1 - K5) aus eloxierten Leichtmetallprofilstangen bestehen.

5. Laserschutzwand nach Anspruch 3 oder 4, **dadurch gekennzeichnet, daß** die Klemmleisten (K1 - K3) zweiter Art im wesentlichen flach streifenförmig ausgebildet sind und eine doppelseitig spreizende Feder (F1) sich senkrecht dazu erstreckt, die in die Nut (N1) rastend lösbar paßt.

6. Laserschutzwand nach Anspruch 3 oder 4, **dadurch gekennzeichnet, daß** die Klemmleisten (K4, K5) erster Art klammerartig und griffig profiliert ausgebildet sind, so daß sie in die Nut (N2, N6) eingesteckt ein eingelegtes Wandblech fest umklammert halten oder seitlich an der Nutwandung ein Wandblech (W6) oder beidseitig je ein Wandblech (W3, W4) anpressen.

7. Laserschutzwand nach einem der vorangehenden Ansprüche, **dadurch gekennzeichnet, daß** mehrere aus den eng aneinandergereihten Leichtmetall-Hohlprofilsträngen (LK1 - LK6) gebildete Teilwände (T1 - T3) mit gegeneinander versetzten Profilstrangfugen (FG1, FG2, FG3, FG4) aneinanderstoßend angeordnet sind.

8. Laserschutzwand nach Anspruch 7, **dadurch gekennzeichnet, daß** die Profilstränge (LW1, LW2; LK1 - LK6) jeweils in aneinandergrenzenden Wandbereichen (WB1 - WB6; WB1* - WB6*) sich seitlich in das Profil erweiternde Nuten (N1* - N6*) und/oder Federn (F1, F2) aufweisen.

9. Laserschutzwand nach Anspruch 8, **dadurch gekennzeichnet, daß** die Nuten (N1* - N6*) und/oder Federn (F1, F2) der aneinander angrenzenden Wandbereiche (WB1 - WB6; WB1* - WB6*) jeweils paarweise voreinander oder ineinandergreifend parallel verlaufend angeordnet sind und die Profilstränge (LW1 - LW2; LK1 - LK6) unmittelbar oder mittelbar nut-feder-formschlüssig verbunden sind.

10. Laserschutzwand nach einem der vorstehenden Ansprüche, **dadurch gekennzeichnet, daß** mindestens eine außenliegende Wand (W1) aus Leichtmetall-Flachprofilsträngen (LW1) ausgebildet ist, die mit mindestens einer angeformten Nut-Federverbindung (N1*, F1; N2*, F2) an der benachbarten Teilwand (T1) formschlüssig eingreifend befestigt ist.

11. Laserschutzwand nach Anspruch 10, **dadurch gekennzeichnet, daß** die Leichtmetallflachprofilstränge (LW1, LW2) jeweils eine benachbarte Profilstrangfüge (FG1, FG4) überdecken.

12. Laserschutzwand nach Anspruch 11, **dadurch gekennzeichnet, daß** die Leichtmetall-Flachprofilstränge (LW2) mit daran endseitig ausgebildeten schmalen Abstandshaltestegen (A1, A2) die angrenzenden Leichtmetall-Hohlprofilstränge (LK1, LK4) kontaktieren und im übrigen einen Zwischenraum (ZR) zu diesen schaffen.

13. Laserschutzwand nach einem der Ansprüche 3 - 12, **dadurch gekennzeichnet, daß** die Federn (F1, F2) und/oder die Doppelfedern (DF1 - DF4) als lösbar rastende Spreizfedern ausgebildet sind.

14. Laserschutzwand nach einem der vorstehenden Ansprüche, **dadurch gekennzeichnet, daß** die Hohlprofilstränge (LK1 - LK6) außen im wesentlichen rechteckig sind und ihr Kantenlängenverhältnis ganzzahlig ist.

15. Laserschutzwand nach Anspruch 14, **dadurch gekennzeichnet, daß** das Kantenlängenverhältnis 1 zu 2 ist.

16. Laserschutzwand nach Anspruch 14 oder 15, **dadurch gekennzeichnet, daß** die Nuten (N1* - N6*) auf jeder Profilaußenseite den gleichen Abstand (AE) zur Profilecke haben.

## Claims

1. A laser protective wall consisting of at least one metallic surface-treated sheet-metal wall (W1 - W6, S1, S2; W1*, W2*) of anodised or chromatised light metal, **characterised in that** the wall comprises thin-walled light-metal extruded profile bars (S1, S2), which consist of a plurality of thin inner walls with multiple-staggered thin-walled angled inner structures (I1 - I4) with cavities therebetween.

2. A laser protective wall according to claim 1, **characterised in that** a support or frame structure is formed from the profile bars (S1, S2), on which structure one or more of the sheet-metal walls (W1 - W6, W1*, W2*) are fixed.

3. A laser protective wall according to claim 1 or 2, **characterised in that** the profile bar (S1, S2) has longitudinal grooves (N1 - N6) in which the sheet-metal walls (W3, W4, W6) are inserted and fixed directly or indirectly with clamping strips (K4, K5) of a first type or in which sheet-metal walls (W1, W2, W5) externally adjoining the profile bar (S1, S2) are indirectly held by clamping strips (K1 - K3) of a second type.

4. A laser protective wall according to claim 3, **characterised in that** the clamping strips (K1 - K5) consist of anodised light-metal profile bars.

5. A laser protective wall according to claim 3 or 4, **characterised in that** the clamping strips (K1 - K3) of the second type are substantially of flat strip-shaped construction and a bilaterally expanding spring (F1) extends perpendicularly thereto and fits with releasable engagement in the groove (N1).

6. A laser protective wall according to claim 3 or 4, **characterised in that** the clamping strips (K4, K5) of the first type are constructed with profiling in clamp and grip form so that when inserted in the groove (N2, N6) they hold an introduced wall sheet fast with clamping or press a wall sheet (W6) or a wall sheet (W3, W4) on either side laterally against the groove wall.

7. A laser protective wall according to any one of the preceding claims, **characterised in that** a plurality of partial walls (T1 - T3) formed from the closely set light-metal hollow profile bars (LK1 - LK6) are disposed contiguously with profile bar joints (FG1, FG2, FG3, FG4) offset from one another.

8. A laser protective wall according to claim 7, **characterised in that** the profile bars (LW1, LW2; LK1 - LK6) each have in adjoining wall zones (WB1 - WB6; WB1* - WB6*) grooves (N1* - N6*) widening laterally into the profile and/or tongues (F1, F2).

9. A laser protective wall according to claim 8, **characterised in that** the grooves (N1*- N6*) and/or tongues (F1, F2) of the adjoining wall zones (WB1 - WB6; WB1* - WB6*) are each disposed in pairs in front of one another or inter-engaging in parallel relationship and the profile bars (LW1 - LW2; LK1 - LK6) are connected directly or indirectly by tongue and groove positively.

10. A laser protective wall according to any of the preceding claims, **characterised in that** at least one external wall (W1) is formed from light-metal flat profile bars (LW1) which by means of at least one integrally formed tongue and groove connection (N1*, F1; N2*, F2) is fixed so as to engage positively on the neighbouring partial wall (T1).

11. A laser protective wall according to claim 10, **characterised in that** the light-metal flat profile bars (LW1, LW2) each overlap an adjacent profile bar joint (FG1, FG4).

12. A laser protective wall according to claim 11, **characterised in that** the light-metal flat profile bars (LW2) contact the adjoining light-metal hollow profile bars (LK1, LK2) by narrow spacer webs (A1, A2) formed on the ends thereof and also provide a gap (ZR) thereto.

13. A laser protective wall according to any one of claims 3 to 12, **characterised in that** the tongues (F1, F2) and/or the double tongues (DF1 - DF4) are constructed as releasably engaging expanding springs.

14. A laser protective wall according to any one of the preceding claims, **characterised in that** the hollow profile bars (LK1 - LK6) are externally substantially rectangular and their edge length ratio is an integral number.

15. A laser protective wall according to claim 14, **characterised in that** the edge length ratio is 1 to 2.

16. A laser protective wall according to claim 14 or 15, **characterised in that** the grooves (N1*- N6*) have, on each profile outside, the same distance (AE) from the profile corner.

## Revendications

1. Paroi de protection laser, composée d'au moins une paroi en tôle (W1 à W6, S1, S2; W1*, W2*) métallique ayant subi un traitement de surface, formée d'un métal léger anodisé ou chromé, **caractérisée en ce que** la paroi présente des barres extrudées (S1, S2) en métal léger à paroi mince, formées d'une pluralité de parois intérieures minces ayant des structures intérieures (I1 à I4) coudées à paroi mince, à échelonnement multiple, avec des espaces creux intermédiaires.

2. Paroi de protection laser selon la revendication 1, **caractérisée en ce que**, à partir des barres profilées (S1, S2), est formée une construction d'appui ou de cadre sur laquelle une ou plusieurs des parois en tôle (W1 à W6, W1*, W2*) sont fixées.

3. Paroi de protection laser selon l'une des revendications 1 ou 2, **caractérisée en ce que** la barre profilée (S1, S2) présente des rainures longitudinales (N1 à N6), dans lesquelles les parois en tôle (W3, W4, W6) sont fixées directement ou indirectement, avec des bandes de serrage (K4, K5) d'un premier type, en étant enfichées, ou dans lesquelles des parois en tôle (W1, W2, W5), en appui extérieurement sur la barre profilée (S1, S2), sont maintenues indirectement par des bandes de serrage (K1 à K3) d'un deuxième type.

4. Paroi de protection laser selon la revendication 3, **caractérisée en ce que** les bandes de serrage (K1 à K5) sont formées de barres profilées en métal léger anodisé.

5. Paroi de protection laser selon la revendication 3 ou 4, **caractérisée en ce que** les bandes de serrage (K1 à K3) d'un deuxième type sont réalisées en forme de bandes sensiblement plates, et une languette (F1) d'écartement double face s'étendant perpendiculairement par rapport à celles-ci et s'ajuste de façon désolidarisable avec un effet d'encliquetage dans la rainure (N1).

6. Paroi de protection laser selon la revendication 3 ou 4, **caractérisée en ce que** les bandes de serrage (K4, K5) d'un premier type sont réalisées à la façon de pinces et profilés en produisant un effet d'emprise, de sorte qu'elles maintiennent, sans être enserrées mais rigidement, une tôle de paroi introduite à l'état enfiché dans la rainure (N2, N6) ou pressent latéralement sur la paroi de rainure une tôle de paroi (W6) ou de part et d'autre chaque fois une tôle de paroi (W3, W6).

7. Paroi de protection laser selon l'une des revendications précédentes, **caractérisée en ce qu'**une pluralité de parois partielles (T1 à T3) formées de tronçons en profilé creux (LK1 à LK6) en métal léger, étroitement alignées en rangée les unes les autres, sont disposées en se jointoyant les unes les autres par des joints en profilé extrudé (FG1, FG2, FG3, FG4) mutuellement décalés.

8. Paroi de protection laser selon la revendication 7, **caractérisée en ce que** les barres profilées (LW1, LW2; LK1 à LK6) présentent chacune, dans des zones de parois (WB1 à WB6; WB1* à WB6*) limitrophes, des rainures (N1* à N6*) et/ou des languettes (F1, F2) dont le profil va en s'élargissant latéralement.

9. Paroi de protection laser selon la revendication 8, **caractérisée en ce que** les rainures (N1* à N6*) et/ou les languettes (F1, F2) des zones de parois (WB1 à WB6; WB1* à WB6*) limitrophes les unes les autres sont chacune disposées en s'étendant parallèlement par paires les unes devant les autres ou en s'engageant les unes devant les autres, et les tronçons profilés (LW1 à LW2; LK1 à LK6) sont reliés, directement ou indirectement, par une liaison à ajustement de forme de type rainure-languette.

10. Paroi de protection laser selon l'une des revendications précédentes, **caractérisée en ce qu'**au moins une paroi (W1) extérieure est réalisée à partir de tronçons profilés plats (LW1) en métal léger, fixée sur la paroi partielle (Tl) voisine avec effet d'engagement et liaison à ajustement de forme, avec au moins une liaison de type rainure-languette (N1*, F1; N2*, F2) formée d'un seul tenant.

11. Paroi de protection laser selon la revendication 10, **caractérisée en ce que** les tronçons profilés (LW1, LW2) recouvrent chacun un joint de tronçons profilés (FG1, FG4) voisins.

12. Paroi de protection laser selon la revendication 11, **caractérisée en ce que** les tronçons profilés plats (LW2) en métal léger sont en contact, par des nervures de maintien d'espacement (A1, A2) étroites, réalisées coté extrémité, avec les tronçons profilés creux (LK1, LK4) en métal léger limitrophes et, au reste, créent un espace intermédiaire (ZR) par rapport à ceux-ci.

13. Paroi de protection laser selon l'une des revendications 3 à 12, **caractérisée en ce que** les languettes (F1, F2) et/ou les languettes doubles (DF1 à DF4) sont réalisées sous la forme de languettes formant ressort d'écartement, à effet d'encliquetage désolidarisable.

14. Paroi de protection laser selon l'une des revendications précédentes, **caractérisée en ce que** les tronçons profilés creux (LK1 à LK6) sont extérieurement sensiblement rectangulaires et le rapport entre les longueurs d'arêtes est un nombre entier.

15. Paroi de protection laser selon la revendication 14, **caractérisée en ce que** le rapport entre les longueurs d'arêtes est de 1 à 2.

16. Paroi de protection laser selon la revendication 14 ou 15, **caractérisée en ce que** les rainures (N1* à N6*) sur chaque face extérieure de profilé ont le même espacement (AE) par rapport à l'angle de profilé.
